# EUROPEAN PATENT SPECIFICATION

(11) **EP 1 171 727 B1**
(45) Date of publication and mention of the grant of the patent: **24.09.2003**
(21) Application number: 00925809.6
(22) Date of filing: 13.04.2000
(51) Int. Cl.: F16H 48/30

(54) **DIFFERENTIAL LOCK**
DIFFERENTIALSPERRE
DISPOSITIF DE BLOCAGE DE DIFFERENTIEL

(30) Priority: 14.04.1999 SE 9901311
(43) Date of publication of application: 16.01.2002
(73) Proprietor: Scania CV Aktiebolag (publ), 151 87 Södertälje (SE)
(72) Inventor: GÖRAS, Erik, S-169 38 Solna (SE)
(86) International application number: SE0000701
(87) International publication number: WO00061972

(56) References cited:
- GB-A- 1 474 518
- US-A- 3 605 965
- US-A- 5 582 557
- PATENT ABSTRACTS OF JAPAN & JP 06 200 992 A (KUBOTA CORP) 19 April 1994

## Description

### Technical field

The present invention relates to a differential lock for a differential gear, according to the preamble to patent claim 1 as disclosed in JP-6 200 992.

### State of the art

Differential locks of various types are used in various types of motor vehicles to improve the latter's running characteristics in certain situations. For reasons of space, the control mechanism required for operating the differential lock is often situated partly inside and partly outside the gear housing in which the differential gear is fitted. For example, a known design incorporates an operating cylinder attached to the outside of the gear housing, at right angles to the output shaft where the locking element of the differential lock is situated. Inside the gear housing there is then an angled arm mechanism which transmits motion from the operating cylinder to the movable locking element. This control mechanism is relatively complicated and bulky. Moreover the operating cylinder, owing to its location, is vulnerable to external influences, e.g. during driving in difficult terrain.

### Objects of the invention

The invention aims to provide a differential lock which does not have the disadvantages mentioned and is more simply constructed and better protected. A further object is to provide a differential lock which is easier to assemble.

### Description of the invention

The object of the invention is achieved by a version according to patent claim 1. The operating device being placed and arranged concentrically with the movable locking element inside the gear housing results in a very compact and well protected differential lock.

A particular advantage is achieved when the cylinder element of the operating device is designed to abut axially against a bearing belonging to the differential housing. This means that the operating device can replace the previously usual adjusting screw used for setting the position and preloading of the bearing and for setting the engagement between an input pinion and the crown wheel which is mounted on the differential housing. This makes possible not only a reduction in the number of component parts but also a compact design.

The operating device also incorporates with advantage a return device which acts upon the piston of the operating device and which keeps the differential lock disengaged when the operating device is not pressurised.

Further features and advantages of the invention are indicated in the ensuing description and patent claims.

The invention is explained below in more detail with reference to an embodiment depicted in the attached drawings.

### List of drawings

Fig. 1 shows a section through a differential gear provided with a differential lock according to the invention.
Fig.2 shows an end view of the operating device depicted in Fig. 1 for the differential lock,
Fig.3 shows a section along the line III-III in Fig.2, and
Fig.4 shows on a larger scale the differential lock and the operating device depicted in Fig.1, with the upper part of the drawing showing the differential lock disengaged, while the lower part of the drawing shows the differential lock engaged.

### Description of an embodiment

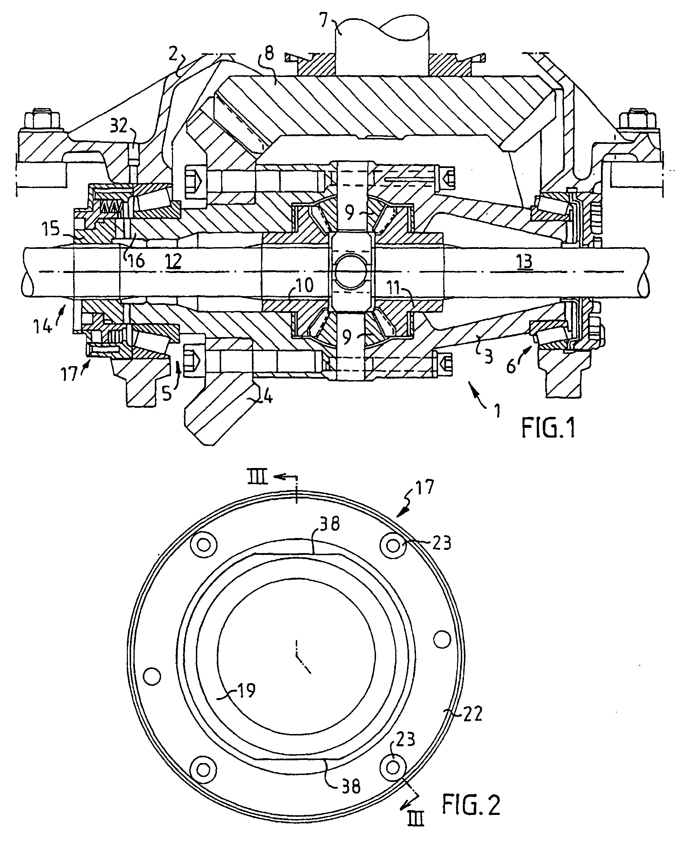

A differential gear 1 intended for a motor vehicle is provided according to Fig. 1 with a gear housing 2 in which in a conventional manner a differential housing 3 which has associated with it a firmly mounted crown wheel 4 is rotatably supported by bearings 5,6 on both sides. The crown wheel 4 is driven by an input pinion 8 which is connected to a driven input shaft 7. Via a number of differential pinions 9 the differential housing 3 engages with two output pinions 10,11, each of which is mounted on, for joint rotation with, its respective output shaft 12 or 13. This means that the two output shafts 12,13 can rotate at different speeds when necessary, e.g. when a motor vehicle is negotiating a curve.

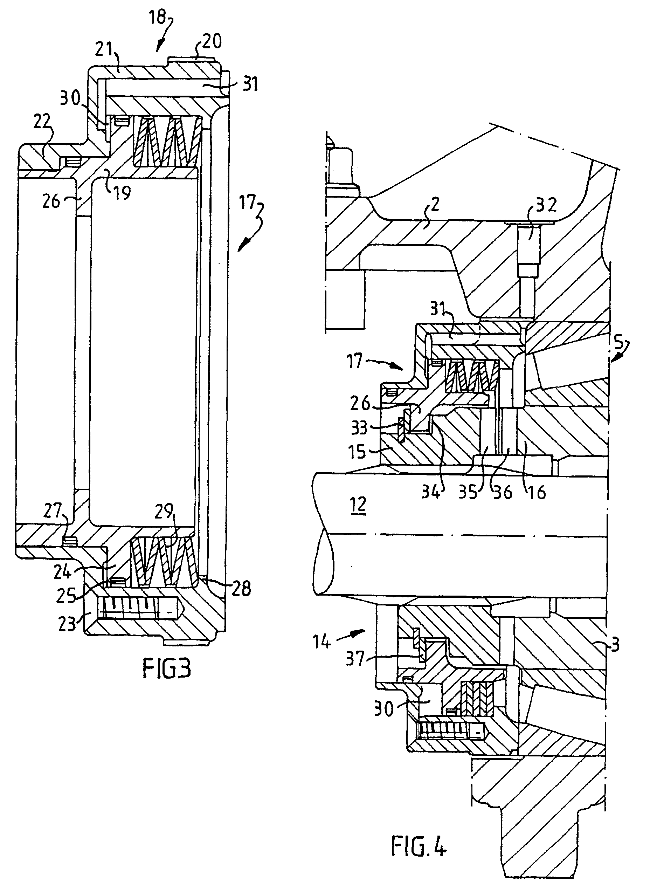

A differential lock 14 acting between the differential housing 3 and one of the output shafts, in this case the output shaft 12, makes it possible to lock the output shaft 12 and the differential housing 3 to one another when necessary. This leads to the two output shafts 12,13 being mutually locked. The differential lock 14 includes a first locking element 15 which is mounted on the output shaft 12 in such a way as not to rotate about it but to be movable along it and which is intended to be able be brought into engagement with a second locking element 16 on the differential housing 3. For the operation of the first locking element 15, an operating device 17, depicted in more detail in Figs. 2 and 3, is fitted in the gear housing 2.

The operating device 17 takes the form of a hydraulic cylinder whose circular outer portion 18 contains an inner portion 19 which is movable in the axial direction and which functions as a piston. The outer portion 18 is provided with an external thread 20 by means of which the operating device 17 is intended to be screwed firmly into the gear housing 2. By appropriate tightening, the play in the two bearings 5,6 and the degree of engagement between the crown wheel 4 and the input pinion 8 can be adjusted as desired.

The outer portion 18 consists of a shell section 21 and a cover section 22 which are joined together by means of a number of fastening elements 23, here in the form of screws. The inner portion 19 has an outer flange 24 which can abut axially against the inside of the cover section 22 and which by means of a seal 25 seals against the inside of the shell section 21. The inner portion 19 also has an inner flange 26 designed to carry with it the first locking element 15 of the differential lock 14. The outside of the inner portion 19 seals against the inside of a cylindrical portion of the cover section 22 by means of a seal 27. The shell section 21 has a flange 28 directed inwards which provides support for one end of a compression spring 29, the other end of which bears against the outer flange 24 of the inner portion 19 and tends to urge the outer portion 18 and the inner portion 19 towards the position of rest depicted in Fig.3.

In the outer portion 18 there is an annular groove which faces towards the outer flange 24 of the inner portion 19 and which together with the outer flange 24 forms a cylinder chamber 30 which can be pressurised via a duct 31 in the outer portion 18. By pressurisation of the cylinder chamber 30, the inner portion 19, against the force of the compression spring 29, can be moved relative to the outer portion 18. When pressurisation ceases, the compression spring 29 acting as a return spring pushes the inner portion 19 back to the initial position in Fig.3.

Fig.4 shows the operating device 17 fitted in position in the gear housing 2, in contact with the outer race of the bearing 5 which takes the form of a taper roller bearing. As previously indicated, the degree to which the operating device 17 is screwed in is used for adjusting the engagement between the crown wheel 4 and the input pinion 8. Via a pressure medium connection 32 arranged in the gear housing 2, the operating device 17 can be supplied with pressure medium, advantageously compressed air, via its duct 31. At the end of the outer portion 18 facing the bearing 5, the duct 31 may with advantage lead into a circumferential groove which is radially open outwards and which, independently of the rotational position of the outer portion 18, allows connection between the duct 31 and the pressure medium connection 32.

A locking device 33 on the first locking element 15 keeps the inner flange 26 in the operating device 17 locked axially against a shoulder 34 on the locking element 15 so that the inner flange 26 acts as a carrier for the first locking element 15.

In the upper position in Fig.4, the operating device 17 is unpressurised and the compression spring 29 holds the inner portion 19 in the position of rest in the outer portion 18 so that mutually facing locking devices 35,36 (e.g. in the form here of locking teeth) on the first and second locking elements 15,16 are kept apart. This means that the differential housing 3 and the output shaft 12 can, when necessary, rotate relative to one another.

Engagement of the differential lock 14 causes pressurisation of the locking device 17 so that the inner portion 19 moves to the engaged position, shown in the lower part of Fig.4, whereby the cylinder chamber 30 has its maximum size and the locking devices 35,36 are mutually engaged and lock together the differential housing 3 and the output shaft 12. To facilitate mutual rotation between the operating device 17 and the first locking element 15 which is mounted on, for joint rotation with, the output shaft 12, it is advantageous for the flange 26 directed inwards on the side of the operating device 17 which faces the locking device 33 to be provided with a slide path 37 made of suitable material. The inner portion 19 is prevented from rotating in the outer portion 18 by the fact that their parts are mutually matched in shape, e.g. by there being one or more planar areas 38 (Fig.2) on a neck portion of the cover section 22.

Within the scope of the invention, the form of both the differential lock 14 and the operating device 17 may be varied in a number of different ways from the version shown here, whereby the operating device 17 may be said to constitute a hydraulic cylinder assembled concentrically with the first locking element 15 or the output shaft 12, the outer portion 18 forms a cylinder element and the inner portion 19 forms a piston.

## Claims

1. Differential lock for a differential gear, in which a differential housing (3) is mounted for rotation in a gear housing (2) and accommodates end portions of two output shafts (12,13) which are likewise mounted for rotation therein, one of which output shafts supports a first locking element (15) which is unrotatable relative to that output shaft but movable axially relative to it and which together with a corresponding second locking element (16) on the differential housing (3) forms a differential lock (14), the engagement and disengagement of which are controlled by an operating device (17) which acts upon the first locking element (15) which operating device (17) consists of a hydraulic cylinder which is assembled concentrically with the first locking element (15) and which has its piston (19) connected to the first locking element (15) and its cylinder portion (18) firmly connected to the gear housing (2) and is designed to abut axially against part of a bearing (5) which belongs to the differential housing (3) and which is fitted in the gear housing (2) for axial setting of the latter's position, **characterised in that** the cylinder portion (18) is designed with an external thread (20) by means of which the operating device (17) is intended to be screwed firmly into the gear housing (2) and that, by appropriate tightening of the operating device (17) in the gear housing (2), the position of the bearing (5) can be adjusted, and **in that** the cylinder portion (18) is designed to be able, irrespective of its rotational position relative to the gear housing (2), to communicate with a pressure medium connection (32) arranged in the gear housing (2).

2. Differential lock according to claim 1, **characterised in that** the operating device (17) incorporates a return device (29) which acts upon the piston (19) and which is arranged to keep the differential lock disengaged when the operating device is in an unpressurised state.

3. Differential lock according to claim 2, **characterised in that** the return device consists of a compression spring acting between the piston and the cylinder portion.

4. Differential lock according to any one of claims 1-3, **characterised in that** the operating device's piston (19) and the first locking element (15) are connected together for joint movement in the differential lock engaging and disengaging directions

5. Differential lock according to any one of claims 1-4, **characterised in that** the operating device's cylinder portion (18) and piston (19) are locked against rotation relative to one another in the circumferential direction.

6. Differential lock according to any one of claims 1-5, **characterised in that** the operating device's cylinder portion (18) takes the form of two sections (21,22) joined together.

## Patentansprüche

1. Differentialsperre für ein Differentialgetriebe, in dem ein Differentialgehäuse (3) in einem Getriebegehäuse (2) drehbar montiert ist und Endabschnitte zweier Ausgangswellen (12, 13) aufnimmt, die darin gleichfalls drehbar montiert sind, von denen eine der Ausgangswellen ein erstes Sperrelement (15) trägt, das in Bezug auf diese Ausgangswelle nicht drehbar, sondern in Bezug auf sie axial beweglich ist und zusammen mit einem entsprechenden zweiten Sperrelement (16) auf dem Differentialgehäuse (3) eine Differentialsperre (14) bildet, deren Einrücken und Ausrücken durch eine Betätigungsvorrichtung (17) gesteuert werden, die auf das erste Sperrelement (15) wirkt, wobei die Betätigungsvorrichtung (17) aus einem hydraulischen Zylinder besteht, der mit dem ersten Sperrelement (15) konzentrisch zusammengebaut ist und dessen Kolben (19) mit dem ersten Sperrelement (15) und dessen Zylinderabschnitt (18) fest mit dem Getriebegehäuse (2) verbunden und so gestaltet ist, dass er axial an einen Teil eines Lagers (5) stößt, das zum Differentialgehäuse (3) gehört, und welcher im Getriebegehäuse (2) für eine axiale Einstellung der Position des letzteren eingebaut ist, **dadurch gekennzeichnet, dass** der Zylinderabschnitt (18) mit einem Außengewinde (20) ausgestattet ist, mit dessen Hilfe die Betätigungsvorrichtung (17) fest in das Getriebegehäuse (2) einzuschrauben ist, und dass durch geeignetes Festziehen der Betätigungsvorrichtung (17) im Getriebegehäuse (2) die Position des Lagers (5) eingestellt werden kann, und dadurch, dass der Zylinderabschnitt (18) so gestaltet ist, dass er ungeachtet seiner Rotationsposition in Bezug auf das Getriebegehäuse (2) imstande ist, mit einer im Getriebegehäuse (2) angeordneten Verbindung (32) für ein Druckmedium in Verbindung zu stehen.

2. Differentialsperre nach Anspruch 1, **dadurch gekennzeichnet, dass** die Betätigungsvorrichtung (17) eine Rückführvorrichtung (29) enthält, die auf den Kolben (19) wirkt und dafür eingerichtet ist, das Differentialgetriebe ausgerückt zu halten, wenn die Betätigungsvorrichtung im drucklosen Zustand ist.

3. Differentialsperre nach Anspruch 2, **dadurch gekennzeichnet, dass** die Rückführvorrichtung aus einer zwischen dem Kolben und dem Zylinderabschnitt wirkenden Druckfeder besteht.

4. Differentialsperre nach einem der Ansprüche 1 - 3, **dadurch gekennzeichnet, dass** der Kolben (19) der Betätigungsvorrichtung und das erste Sperrelement (15) für eine gemeinsame Bewegung in die Differentialsperre einrückenden und ausrückenden Richtungen verbunden sind.

5. Differentialsperre nach einem der Ansprüche 1 - 4, **dadurch gekennzeichnet, dass** der Zylinderabschnitt (18) und Kolben (19) der Betätigungsvorrichtung gegen Rotation in Bezug aufeinander in der Umfangsrichtung gesperrt sind.

6. Differentialsperre nach einem der Ansprüche 1 - 5, **dadurch gekennzeichnet, dass** der Zylinderabschnitt (18) der Betätigungsvorrichtung die Form zweier miteinander verbundener Sektionen (21, 22) aufweist.

## Revendications

1. Bloqueur de différentiel pour un engrenage différentiel, dans lequel un bâti de différentiel (3) est monté à rotation dans un bâti d'engrenage (2) et reçoit des parties d'extrémité de deux arbres de sortie (12, 13) qui sont, de même, montés à rotation dans ce bâti, arbres de sortie dont un supporte un premier élément de blocage (15) qui est immobilisé en rotation par rapport à cet arbre de sortie, mais est déplaçable en direction axiale par rapport à celui-ci, et qui, conjointement avec un second élément de blocage (16) correspondant prévu sur le bâti de différentiel (3), forme un bloqueur de différentiel (14), dont l'enclenchement et le désenclenchement sont commandés par un dispositif d'actionnement (17) qui agit sur le premier élément de blocage (15), lequel dispositif d'actionnement (17) consiste en un vérin hydraulique qui est assemblé au premier élément de blocage (15), concentriquement à celui-ci, et qui a son piston (19) relié au premier élément de blocage (15) et sa partie formant le cylindre (18) réunie fermement au bâti d'engrenage (2), et est conçu pour venir axialement en appui contre une partie d'un palier (5) qui appartient au bâti de différentiel (3) et qui est inséré dans le bâti d'engrenage (2) pour fixer axialement la position de ce dernier, **caractérisé en ce que** la partie formant le cylindre (18) est dotée d'un filetage externe (20), au moyen duquel le dispositif d'actionnement (17) est destiné à être vissé fermement dans le bâti d'engrenage (2), et que, par un serrage approprié du dispositif d'actionnement (17) dans le bâti d'engrenage (2), la position du palier (5) peut être ajustée, et **en ce que** la partie formant cylindre (18) est conçue pour être apte, quelle que soit sa position angulaire par rapport au bâti d'engrenage (2), à communiquer avec un raccord pour fluide sous pression (32) disposé dans le bâti d'engrenage (2).

2. Bloqueur de différentiel selon la revendication 1, **caractérisé en ce que** le dispositif d'actionnement (17) comporte un dispositif de rappel (29) qui agit sur le piston (19) et qui est agencé pour maintenir le bloqueur de différentiel désenclenché lorsque le dispositif d'actionnement est dans un état de pression relâchée.

3. Bloqueur de différentiel selon la revendication 2, **caractérisé en ce que** le dispositif de rappel consiste en un ressort de compression agissant entre le piston et la partie formant cylindre.

4. Bloqueur de différentiel selon l'une quelconque des revendications 1 à 3, **caractérisé en ce que** le piston (19) du dispositif d'actionnement et le premier élément de blocage (15) sont reliés ensemble en vue d'un déplacement conjoint dans les directions d'enclenchement et de désenclenchement du bloqueur de différentiel.

5. Bloqueur de différentiel selon l'une quelconque des revendications 1 à 4, **caractérisé en ce que** la partie formant cylindre (18) et le piston (19) du dispositif d'actionnement sont bloqués contre une rotation de l'un par rapport à l'autre dans la direction circonférentielle.

6. Bloqueur de différentiel selon l'une quelconque des revendications 1 à 5, **caractérisé en ce que** la partie formant cylindre (18) du dispositif d'actionnement prend la forme de deux tronçons (21, 22) réunis ensemble.
